(19) **Europäisches Patentamt**

**European Patent Office**

**Office européen des brevets**

(11) **EP 1 376 421 A1**

(12) # EUROPEAN PATENT APPLICATION

(43) Date of publication:
**02.01.2004 Bulletin 2004/01**

(51) Int Cl.⁷: **G06F 17/60**

(21) Application number: **02014464.8**

(22) Date of filing: **28.06.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **DEUTSCHE BÖRSE AG**<br>**60487 Frankfurt am Main (DE)** | (72) Inventors:<br>• **Lammersdorf, Christoph,**<br>  **c/o Deutsche Börse AG**<br>  **60487 Frankfurt am Main (DE)**<br>• **Neufeld Thorsten**<br>  **60487 Frankfurt am Main (DE)**<br><br>(74) Representative: **Grünecker, Kinkeldey,**<br>**Stockmair & Schwanhäusser Anwaltssozietät**<br>**Maximilianstrasse 58**<br>**80538 München (DE)** |

(54) **Bond valuation system and method**

(57) A data processing system and operation method for valuating debt investment vehicles is provided. Heterogeneous market data that relates to the fixed income securities is received, and bonds relating to the received market data are identified. At least one of a plurality of bond classes is assigned to each of the identified bonds. Based on the received market data, class-specific valuation data is generated, and based on the generated class-specific valuation data pertaining to the class of the respective bond, bond-specific valuation data for each of the identified bonds is generated. The bond-specific valuation data is output. That is, a bond valuation technique is provided that may improve the reliability in particular of validating illiquid bonds.

Fig.1

**EP 1 376 421 A1**

**Description**

The present invention generally relates to data processing systems, and in particular to data processing systems and methods for valuating debt investment vehicles, or fixed income securities.

**BACKGROUND OF THE INVENTION**

A debt instrument involves the securitization of a loan to an entity (e.g. government, company etc.) which requires funds for a defined period of time at a specific rate of interest (fix or floating). In exchange for the funds, the entity issues the investor a certificate that states the interest rate and the maturity date.

A sizeable portion of debt instruments are traded in today's financial markets. These are commonly known as fixed income securities. In general, there are two types of fixed income securities: plain bonds and structured bonds.

Plain bonds have a fixed maturity date, and cash flows to the investor are known on the issue date. Examples of plain fixed income products include government bonds such as federal treasury bills ("Bundesanleihen"), T-Bills etc. which may be secured or not, and if secured, have priority or not.

Structured bonds combine two or more different financial instruments in a structured manner. Sometimes this combination has both debt and equity characteristics. A convertible bond is a good example as it has features of an ordinary bond but is significantly influenced by the price movements of the stock into which it is convertible. Further examples include callable bonds, multi-callable bonds etc. These, of course, are only some of many types of debt investment vehicles. It is expected that the number of structured product types will increase and become more complex as product developments continue.

Fixed income securities are usually issued by governments or companies to raise funds to finance their investments. These securities are purchased by individuals and institutions for different reasons. These reasons vary from maximising profits through speculative trading to buying a known future cash flow to fund the future needs of pension participants. The investments may be short to long-term.

Bonds are traded on organised exchanges as well as "over the counter" (OTC) in unorganised markets. Bonds are issued in the primary market. This is a market in which investors have the first opportunity to buy a newly issued security. Subsequently the fixed income securities are traded in the secondary market. Here investors purchase an asset from another investor rather than an issuing entity.

The issued volume of fixed income products in the European markets increased from about 200 trillion (US trillions) Euro in February 1996 to about 850 trillion Euro in February 2001. Industry experts estimate that more than 90% of issued bonds are traded worldwide over the counter. Official figures concerning OTC trading volumes are not easily available as these markets are highly fragmented and intransparent.

Price information on organised markets are generally available to the general public. In contrast OTC trading takes place mainly by telephone or more or less exclusive trading platforms such as Eurex® Bonds, EuroMTS®, between financial institutions. In general, price information on trades is not available to the public. This results in insufficient market and price transparency.

The pricing of fixed income securities is complicated if insufficient liquidity exists in the market. In general, liquidity is a characteristic property of a market. In highly liquid markets an asset can be easily converted into cash without having to pay a higher price discount. This is reflected in low spreads between bid and asks prices, as well as in low volatility. However, some bond markets are known to suffer from illiquidity, particularly if there is little or no trading in a specific bond. This can be the case if the issued volume has been sold on a large scale in the primary market and if investors hold the security in their portfolio rather then trading it actively. As a consequence, a fair market price does not exist for illiquid bonds. For these illiquid bonds the corresponding price will be set with a discount even though the bond might have similar characteristics (e.g. issue terms, ratings) as a comparable liquid bond.

Furthermore, prices in liquid markets reflect the expectations of all market players. In illiquid markets there are often only single and individual price estimates by brokers and dealers. As the pricing quality is also lower than in more liquid markets, illiquid bonds are usually sold with higher price surcharges.

Reliable price information is crucial during the entire investment cycle from the buy/sell decision through clearing and settlement to risk management and accountancy. In particular, institutional investors are dependent on daily fair-market price information for all fixed income investment vehicles in their portfolio for risk assessment purposes. Normally, reliable price information for liquid bonds is available from data providers. Price information for illiquid bonds is generally only available from brokers and dealers by telephone request. This information is only an estimation by the broker as no market prices are readily available. Getting bid/ask quotes from brokers and dealers is current best practice by institutional investors to valuate illiquid bonds in their portfolio.

As can be realized by the foregoing description, the complexity and diversity of global over-the-counter trading implicates an unprecedented level of sophistication by market participants in the fair-market valuation of illiquid bonds. The complexity associated with the transactions and the high trading volumes in fixed income securities undertaken by institutional investors does presently not allow to reliably perform a fair-market valuation of illiquid bonds.

## SUMMARY OF THE INVENTION

Given these problems with the prior art techniques, it is the object of the present invention to provide a data processing system and method that may allow unsophisticated market participants to obtain reliable price information even for illiquid debt instruments.

This object is solved by the invention as claimed in the independent claims.

According to the invention, heterogeneous market data that relates to debt investment vehicles or fixed income securities to be valuated, is received. After assigning bonds that relate to the received market data into bond classes, a class-specific valuation is performed. Bond-specific valuation data that is generated based on class-specific valuation data pertaining to the class of the respective bond, is output.

That is, heterogeneous market data is processed using a classification (or segmentation) scheme that allows for generating and outputting bond-specific valuation data in a homogeneous manner even where the originating data comes from heterogeneous sources.

Moreover, the classification technique of the invention makes it possible to process a heavily increased data volume of heterogeneous, disparate market information. Thus, the invention is advantageous in that it may provide comprehensive valuation information even to less sophisticated market participants allowing them to reliably make decisions with respect to their portfolio.

Moreover, the invention is advantageous in that it may provide an automated valuation technique providing up to date information to the market participants at any time. Thus, the participants may acquire full support in their market decisions by being provided with undelayed or nearly undelayed valuation information.

Another advantage of the present invention is that by means of the classification technique, heterogeneous data that exists in a number of different proprietary formats becomes comparable. Thus, the invention advantageously establishes a comparability which benefits the market participants.

Preferred embodiments of the invention are defined in the dependent claims.

When preprocessing the received heterogeneous market data and storing the preprocessed data, the data processing system of the invention may collect all the market information asynchronously. This advantageously increases even more the data volume accessible by the system, thus improves the reliability of the bond valuation, and its predictability.

If the preprocessing of the heterogeneous market data includes filtering the data, this may achieve the advantage that the storage capacity within the data processing system can be decreased without deteriorating the overall operation quality. Moreover, if there is a given storage capacity provided in the system, filtering the market data before storage may even more increase the amount of input information that can be dealt with.

If the preprocessing of the received heterogeneous market data includes its conversion to a predefined format and the storage of the converted data, the data processing within the system is significantly simplified. Moreover, using a predefined format within the data processing system may achieve an extendibility of the system by new valuation algorithms since any added algorithm acting on the stored data may use existing functions for handling the data.

It has been shown that an assignment of bonds to classes is particularly advantageous if it is based on classification rules that take into account the country of issue, the type of issuer, the volume of issuance, the rating, or the type of the respective bond. Based on these classification rules, the bonds can be efficiently grouped together such that both practicability and reliability are improved.

By providing a data processing system where the classification rules can be updated, a valuation technique is provided having highest flexibility with respect to any kind of changes within the market.

Highest valuation accuracy may be advantageously obtained by calculating a zero spread for each bond when generating the class-specific valuation data. It has been found particularly advantageous to calculate the zero spread by extracting an over-the-counter price from the market data, determining a zero yield from a fair-market curve, and solving an estimation equation using these parameters. In addition, taking a coupon payment of the respective bond into account when solving the estimation equation, even more increases the precision of the calculation technique.

When determining the zero yield, it is particularly advantageous to access the fair-market curve that corresponds to a timestamp of the over-the-counter price to avoid any adverse impact from the fact that the available over-the-counter price may be delayed in time.

Performing an iterative process when solving the estimation equation is found to improve calculation accuracy significantly.

Further advantages may be achieved by calculating a spread curve for each bond class when generating the class-specific valuation data. The calculation of spread curves produces data material that may be flexibly used in any further valuation step for reliably and precisely valuating the bonds.

A particularly advantageous algorithm for calculating the spread curves has been found to include the calculation of zero spreads for bonds pertaining to the respective class, and combining the calculated zero spreads to a spread curve for the respective class.

If the calculated zero spreads are filtered before being combined to the spread curve, valuation accuracy can be advantageously increased by disregarding data items which are evidently misplaced, which are influenced by unwanted secondary effects, or that are too small in their absolute magnitude to keep the standard deviation of the relative random distribution below an acceptable threshold value.

Calculation accuracy can be even more increased by averaging the calculated zero spreads over given time-to-maturity intervals when combining the zero spreads, since this advantageously improves the smoothness of the spread curves.

If the spread-curve data is output, the market participants are advantageously provided with even more comprehensive market information to more reliably come to their market decisions.

When the generation of bond-specific valuation data includes accessing a fair-market curve, the valuation technique of the invention is advantageously based on reliable reference data to improve valuation quality.

Further, if a spread curve of the respective class is accessed to determine a spread value therefrom, a technique is provided that enables a modification of the fair-market curve data for each individual bond to even more improve valuation accuracy.

The above-mentioned advantages apply in particular to data processing systems where the generation of both class-specific valuation data and bond-specific valuation data is done using fair-market curves, since the system may make use of reliable reference data at any stage of the valuation processing flow.

If the fair-market curves are repetitively updated, the system has advantageously full access to up to date reference data at any time.

Moreover, if the fair-market-curve data is output in addition to the bond-specific valuation data, the market participants may advantageously investigate the received valuation information vis-à-vis the reference data, and the market participants may even apply additional proprietary post-processing algorithms on the received valuation data.

## DESCRIPTION OF THE DRAWINGS

In the accompanying drawings, preferred embodiments of the invention are described in more detail. The drawings are not to be construed as limiting the invention to only the illustrated and described examples of how the invention can be made and used. Further features and advantages will become apparent from the following and more particular description of the invention, as illustrated in the accompanying drawings, wherein:

FIG. 1 is a block diagram illustrating the components of a data processing system according to a preferred embodiment of the invention;

FIG. 2 is a flowchart illustrating the main process of operating the system shown in FIG. 1;

FIG. 3 is a flowchart illustrating in more detail the data collecting step performed in the process of FIG. 2;

FIG. 4 is a flowchart illustrating the filtering process performed when collecting the data as shown in FIG. 3;

FIG. 5 is a flowchart illustrating the class assignment performed in the process of FIG. 2;

FIG. 6 is a flowchart illustrating the spread estimation performed in the process of FIG. 2;

FIG. 7 is a graph illustrating a fair-market curve that may be used in the spread estimation process of FIG. 6;

FIG. 8 is a flowchart illustrating the spread curve calculation performed in the process of FIG. 2;

FIG. 9 is a flowchart illustrating the bond valuation performed in the process of FIG. 2; and

FIG. 10 is a graph for illustrating the modification of the fair-market curve that may be performed when valuating bonds as shown in FIG. 9.

## DETAILED DESCRIPTION OF THE INVENTION

The illustrative embodiments of the present invention will be described with reference to the figure drawings wherein like elements and structures are indicated by like reference numbers.

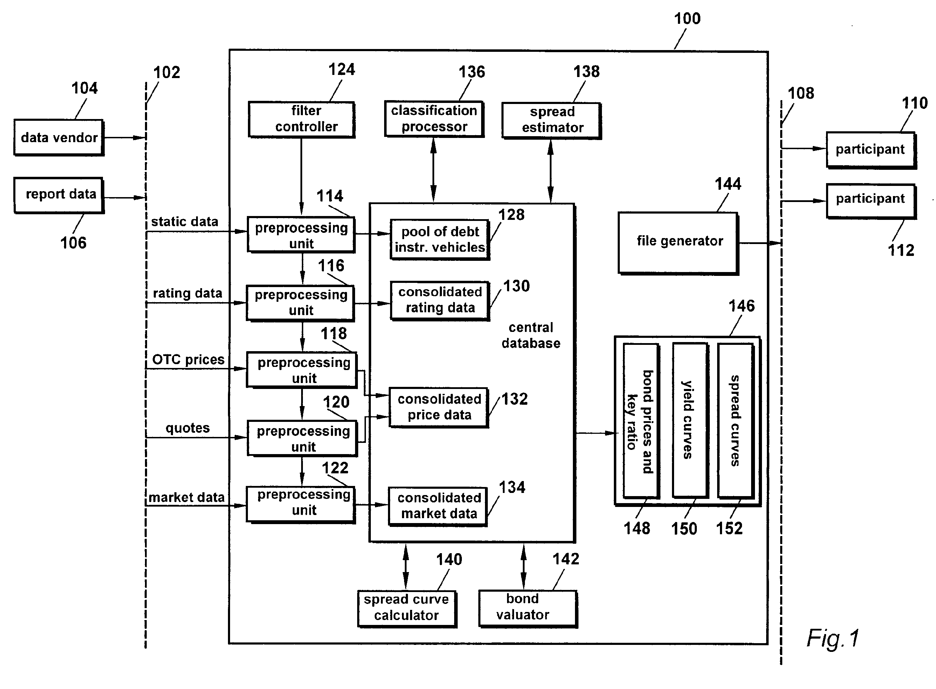

Referring now to the drawings and particularly to FIG. 1 which illustrates a preferred embodiment of a data processing system for valuating debt instruments such as fixed income securities, and portfolios, the system is shown to comprise a central computer system platform 100 which is connected to an input interface 102 and an output interface 108. The computer system 100 may be a Windows® NT server but it is to be noted that other operating systems could be used as well. Moreover, it is to be noted that other embodiments are possible where the platform 100 is implemented using more than one separate but interconnected computer systems, e.g., one acting as fileserver, another being a database server, and yet another separate computer system acting as source data server.

As can be seen from FIG. 1, the platform 100 interacts with several data sources through an input interface 102. The data sources may be internal and external sources, e.g., data vendors 104 or regulatory authorities 106 that may supply trade data that were previously reported to the authorities.

The data sources provide heterogeneous market data to the platform 100. Heterogeneous market data are disparate data such as securities static data, rating data, over-the-counter prices, quotes, and various on-line market data.

The heterogeneous market data is input to the platform 100 where a number of interconnected units act together to process the data for providing bond valuation data. The output data is transmitted to the market participants 110, 112 through an output interface 108. In addition to the bond valuation data, there may be other data provided to the market participants 110, 112. This will be explained in more detail below.

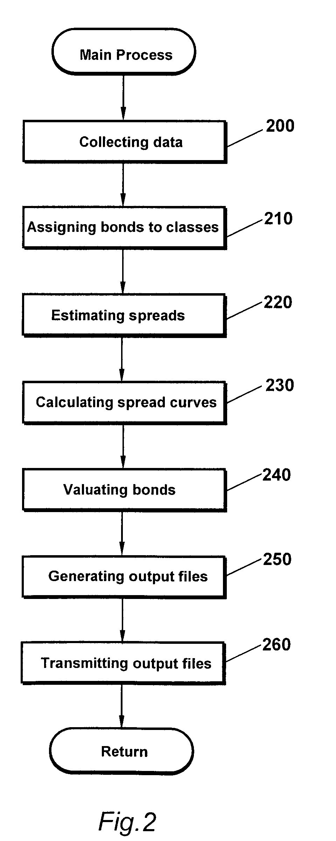

The bond valuation technique of the present embodiment will now be explained with reference to the flowchart of FIG. 2.

First of all, the heterogeneous market data is collected in step 200. For this purpose, the platform 100 comprises preprocessing units 114-122 that receive the incoming data, perform an initial data processing thereon under control of filter controller 124, and feed the preprocessed data to the central database 126. In the central database 126, the preprocessed data are separately stored in storage areas 128-134, and it is to be noted that different preprocessing units 114-122 may be allowed to store output data into common storage areas 132. Moreover, the preprocessed data of all preprocessing units 114-122 may be stored in one single storage area in another embodiment.

After having collected and consolidated the incoming data, the process of FIG. 2 proceeds in step 210 with assigning bonds to classes (or segments). For this purpose, the central database 126 is interconnected with a classification processor 136 that may retrieve the consolidated data 128-134 from the central database 126, apply classification rules, and write the classification result back to the central database 126. The assignment of bonds to classes may be based in particular on the consolidated static data, i.e. the pool of debt instruments vehicles 128, and on the consolidated rating data 130.

After having assigned the identified bonds to one of the bond classes, spreads are estimated in step 220 by means of the spread estimator 138. As will be explained in more detail below, the spread estimation process includes the calculation of spreads from a fair-market curve and the calculation of zero spreads from over-the-counter prices.

The process of FIG. 2 continues with step 230 of calculating spread curves by means of spread curve calculator 140. The spread curves are calculated for each class.

After having calculated the spread curves in step 230, the process continues with valuating the bonds in step 240 by means of bond valuator 142. The valuation of bonds may be done using valuation curves, i.e., the fair-market curve and the spread curve which was calculated before.

In step 250, output files are generated including the bond prices and key ratios, the fair-market curves, and the spread curves. The files 148-152 are stored in a file buffer 146, and the platform 100 comprises a file generator 144 for generating the files from data received from the central database 126. The generated output files are then delivered to the clients 110, 112 in step 260 via a preferred medium.

It is to be noted that the flowchart of FIG. 2 gives an overview of the entire process of operating the data processing system 100 of FIG. 1 for bond valuation and delivery of the calculated prices. The flowchart should, however, not be understood as restricting the invention to the depicted sequence of method steps. For instance, steps 200 to 230 can be considered as relating to a pre-pricing phase while step 240 relates to the pricing phase and steps 250 and 260 to the post-pricing phase. Each of the phases could be handled separately and independently from each other by different hardware components and based on different control software. Moreover, even within one of the phases, the various steps could be performed in a modified order, or even simultaneously. Furthermore, some of the steps can be dropped from time to time, or replaced with equivalent process steps. For instance, step 230 of calculating spread curves may be performed once a day, and if there are bonds to be valuated in the time between, previously calculated spread curves can then be used.

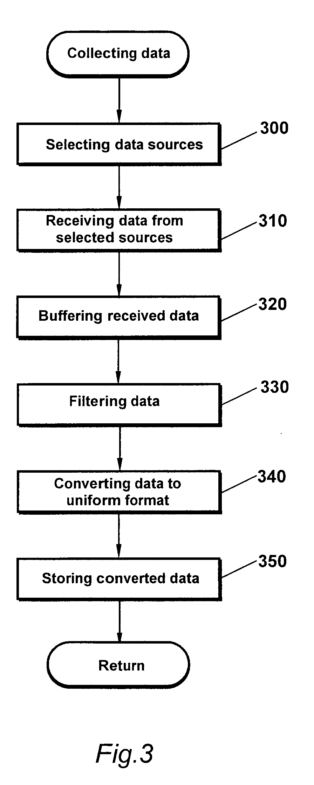

Turning now to FIG. 3, the process of collecting the heterogeneous market data is depicted in more detail. In step 300, the data sources such as data vendors 104 and reporting data for regulatory authorities 106 are selected. The various data sources may provide public or non-public market data, and by selecting a high number of different data sources, large quantities of disparate market data can be used for compilation.

From the selected sources, the heterogeneous market data are received in step 310 and buffered in the preprocessing units 114-122 in step 320.

The preprocessing units 114-122 perform a preprocessing function on the received data to generate and output consolidated data. As apparent from FIG. 3, preprocessing may include filtering the data (step 330) and converting the data to a uniform format (step 340).

When filtering the data in step 330, the preprocessing units 114-122 receive a control signal from filter controller 124 for filtering the data. Filtering means extracting useful data from the incoming data stream and disregarding the remaining data.

After having filtered the data, a data format conversion may be performed in step 340 for consolidating a substantial amount of market data, e.g., static data and ratings, and market activities, e.g., bond quotes of highly liquid bonds and traded over-the-counter prices of illiquid bonds, into a simplified data structure as a basis for subsequent data processing. The consolidated data is then stored in designated areas 128-134 of the central database 126.

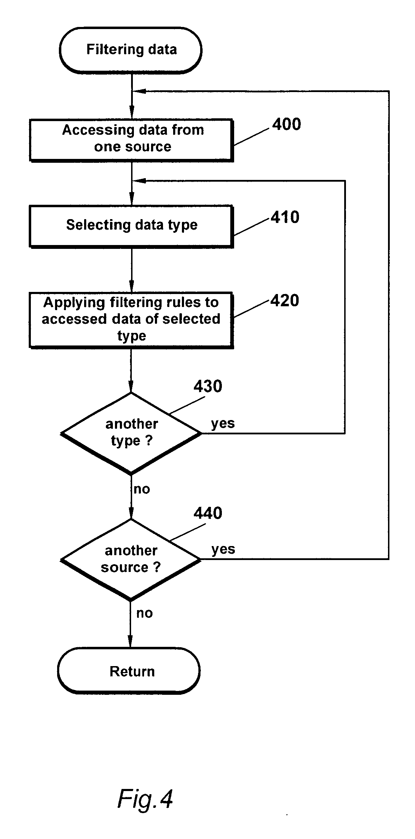

Turning now back to step 330 of filtering the data, a preferred embodiment thereof is depicted in the flowchart of FIG. 4. In step 400, data from one source is accessed. In the subsequent step 410, a data type is selected. Possible data types denote e.g. plain bonds, structured bonds, bonds that are traded on organized exchanges and over-the-counter bonds. To the accessed data of the selected type, filter rules are applied in step 420 under control of filter controller 124. Then, another type can be chosen in step 430, and another source can be selected in step 440. The process of FIG. 4 makes it possible to apply filtering rules that are designed for specific data types and specific data sources.

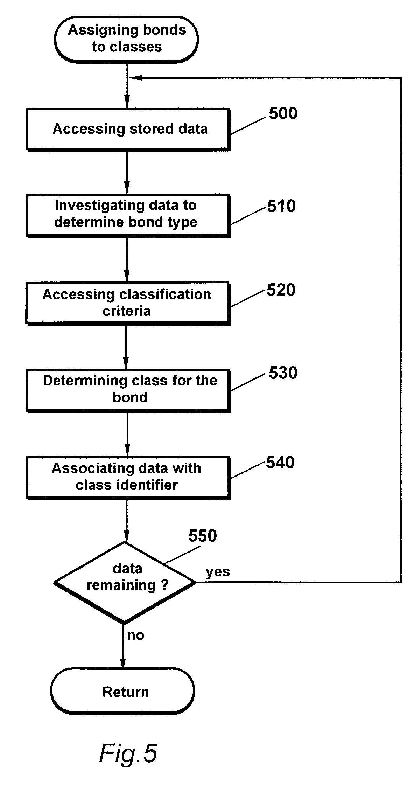

Once the heterogeneous market data is received and preprocessed, including filtering the data and converting it to a simplified data structure, bonds are assigned to classes. This will now be discussed in more detail with reference to FIG. 5.

As apparent from the flowchart of FIG. 5, the collected and consolidated data 128-134 is accessed in step 500. The accessed data is then investigated to determine the type of bond (step 510). In the present embodiment, there are two different types of bonds: bonds relating to the non-benchmark segment and bonds relating to the fair-market segment. The non-benchmark-segment bonds are traded over the counter while the fair-market-segment bonds relate to the liquid market.

In the following step 520 classification criteria are accessed. The criteria define the rules on the basis of which the bonds can be assigned to classes. Examples of classification criteria are given in the following table:

| classification criterion | possible values |
|---|---|
| Country of issue | Germany, France, U.S.A |
| Type of issuer | Sovereign, Subsovereign, Corporate |
| Type of industry | Financial, Technology, Telecommunication |
| Issuer | Commercial Bank A, Merchant Bank B, Investment Bank C |
| Consolidated rating | 1, 2, 3, 4, 5, etc. |
| Type of security | Straight bond, zero bond, convertible bond |
| Volume of issuance | Jumbo, <100 m Euro; >101 m Euro |
| Type of collateral | Collateralized, non-collateralized |
| Type of ranking | Senior-, sub-ordinated |

It is to be noted that in the present embodiment, the classification criteria (or classification rules) are predefined and realized by means of an implemented computer readable and executable program code. However, in other embodiments the segmentation can be changed or modified on a regular or irregular basis and this may happen even daily. In the latter case, step 520 would then include the modification or redefinition of classification criteria.

There may be different sets of classification rules for different types of bonds. For instance, for building specific fair-market-segment classes, highest ranking within the bond class and a uniform distribution among the maturities may be the most crucial criteria.

Based on the classification criteria accessed in step 520, the correct class for the bond can be determined in step 530. Examples for non-benchmark-segment classes are given below:

| class ID | description | examples |
|---|---|---|
| TDES | NBS Germany Sovereigns | German Federal Government Bonds ("Bund") |

(continued)

| class ID | description | examples |
|---|---|---|
| TDEZ | NBS Germany Subsovereigns | German Laender and municipalities bond loans |
| TDEPJ | NBS Germany Jumbo Pfandbriefe | German jumbo Pfandbriefe, volume of issuance >= 1.000 millions Euro |
| TDEP1 | NBS Germany Pfandbriefe 1 | German Pfandbriefe, consolidated ranking = 1 (corr. AAA) |
| TDEP1+ | NBS Germany Pfandbriefe 1+ | German Pfandbriefe, consolidated ranking > 1 (corr. AA+ or less) |
| C_DCX | Corporate Bonds | Corporate bonds issued by DaimlerChrysler® |

As can be seen from the table, each class is identified by means of a class identifier, and it is to be noted that further classes for corporate bonds and central government securities may be added.

Examples of fair-market-segment classes are given in the following table:

| class ID | description | examples |
|---|---|---|
| IDES | FMS Germany Sovereigns | German Federal Government Bonds ("Bund") |
| IDEPJ | FMS Germany Jumbo Pfandbriefe | German jumbo Pfandbriefe |
| Swap_ZC | Euro Swap Curve | Zero curve resulting from Euro swap curve |

Again, each class is identified by means of a class identifier and it is to be understood that the above tables are given for explanatory reasons only and should not be misinterpreted as being imperative.

Once the correct class for the respective bond is determined in step 530, the bond data is associated with the respective class identifier in step 540 and written back to the central database 126. It is then checked in step 550 whether there is bond data remaining that still requires further class assignments, and if so, the process reiterates to step 500.

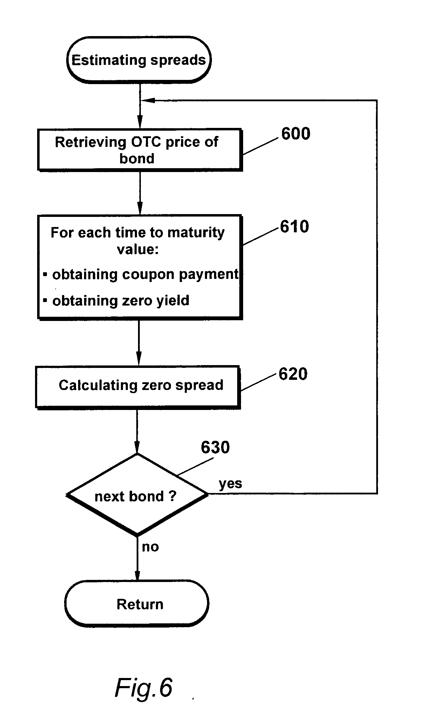

Referring now back to FIG. 2, after bonds are assigned to classes in step 210, spreads are estimated in step 220. This will now be explained in more detail with reference to FIG. 6.

In this figure, a flowchart is shown for illustrating the spread estimation process that scrolls through all of the non-benchmark-segment bonds, i.e. the over-the-counter bonds, for calculating the respective zero spreads.

As will be described in more detail below, the zero spreads are calculated based on fair-market-curve data and will be used for calculating spread curves. For this reason, each non-benchmark-segment class is associated with one spread curve and one fair-market curve. An example of a possible curve assignment is given in the following table:

| class | spread curve | fair-market curve |
|---|---|---|
| TDES | TDES_S | IDES_F |
| TDEZ | TDEZ_S | IDES_F |
| TDEPJ | TDEPJ_S | IDEPJ_F |
| TDEP1 | TDEP1_S | IDEPJ_F |
| TDEP1+ | TDEP1+_S | IDEPJ_F |
| C_DCX | C_DCX_S | Swap_ZC |

As apparent therefrom, the curves are identified by means of unique identifiers which can be used by the spread estimator 138, the spread curve calculator 140, the bond valuator 142 and the file generator 144 to access the respective curve data. The curves identified by the unique curve identifiers may be stored in the central database 126 or in another storage unit of the platform 100.

It is to be noted that for each class there may exist more than one fair-market curve or spread curve for various calculation times. That is, each unique curve identifier may actually identify a set of curves relating to different calculation times.

Moreover, it can be seen from the above table that different classes may address the same curves by having associated the same identifier. For instance, while the classes TDES and TDEZ have different spread curves associated, they both address the same fair-market curve IDES_F.

Turning now back to the spread estimation process, the following equation will be iteratively solved

$$P_{OTC} = \sum_{t}^{T} \frac{c_t}{(1 + y_t + \Delta)^t}$$

In this equation, $\Delta$ is the zero spread that is to be determined. The following parameters are known and can be retrieved or obtained: $P_{OTC}$ is the over-the-counter price of the respective bond, $t$ is the time to maturity, $T$ is the remaining term to maturity, $c_t$ is the coupon payment of the bond, and $y_t$ is the valid zero yield that may be derived from the respective fair-market curve that relates to time t to maturity.

That is, the process of estimating the spreads comprises step 600 of retrieving the over-the-counter price of the respective bond, and obtaining the coupon payment and the zero yield to each time-to-maturity value (step 610). The zero spread $\Delta$ can then be calculated in step 620 in an iterative process. Finally, the process may step back for estimating the spread of the next bond (step 630).

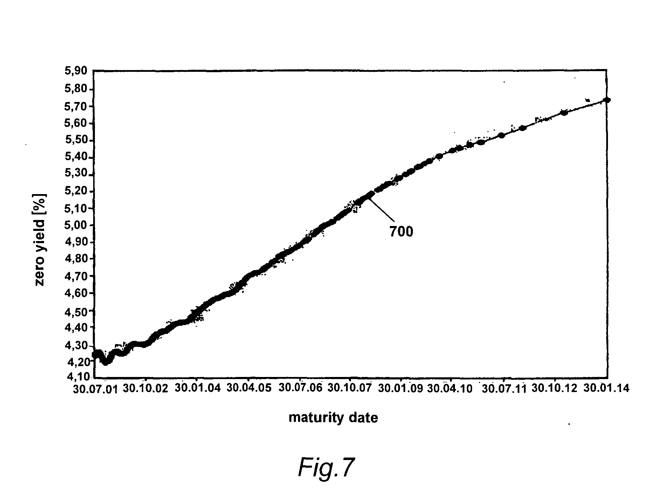

An example of a fair-market curve is given in FIG. 7. As apparent therefrom, the curve 700 identifies a zero yield for each maturity date. This curve may be derived from the current consolidated prices of fair-market bonds. The closeness or density of points within the curve 700 depends on the number of fair-market bonds that are taken into consideration for calculating the curve. There may be a linear interpolation performed to achieve zero yield values between the individual data points.

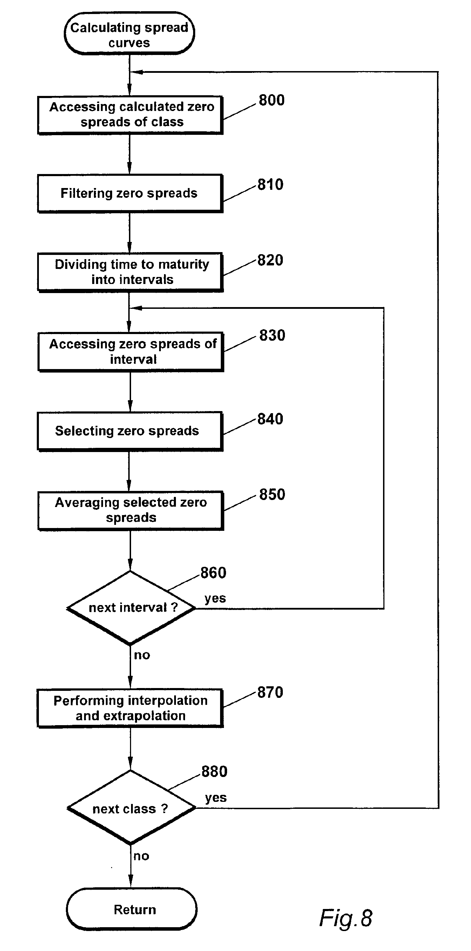

Once the zero spreads for each over-the-counter bond is determined using the fair-market curve that relates to the respective timestamp of the available price, spread curves can be calculated in step 230. This will be explained in more detail with reference to FIG. 8.

As can be seen from the flowchart of this figure, there is an outer loop that iterates through all the non-benchmark-segment classes. That is, class-specific spread curves are calculated that may be considered as being class-specific valuation data.

In step 800, the zero spreads of the respective class are accessed. The accessed zero spreads are then filtered in step 810 to eliminate outlying data points that should be disregarded to increase accuracy. Then, the time-to-maturity range is subdivided into intervals in step 820. The intervals, or time-to-maturity subranges, may then be separately handled in steps 830 to 860.

First, all the zero spreads relating to each individual interval are accessed in step 830. Some of the accessed zero spreads are selected in step 840 to decrease the number of data values to the minimum necessary amount. Using the selected zero spreads, average values are calculated in step 850. That is, once the inner loop of steps 830 to 860 is completed, averaged zero spread values for each interval have been determined for the current class. Using these average values, an interpolation and extrapolation may be performed in step 870 to determine zero spread values for time-to-maturity values where no calculation had been performed.

At the end of the process of FIG. 8, spread curves have been calculated for each of the non-benchmark-segment classes. These spread curves may be used to determine a bond spread for each time to maturity. The bond spread may be applied to each bond of the respective class.

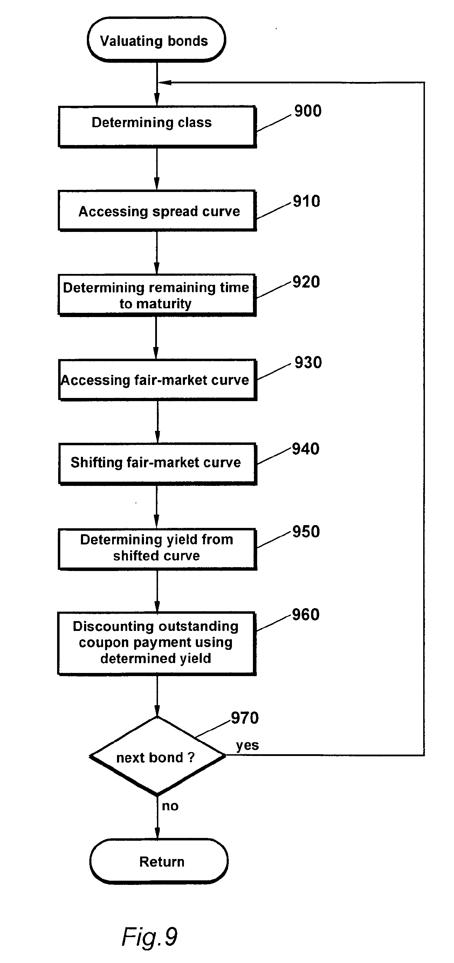

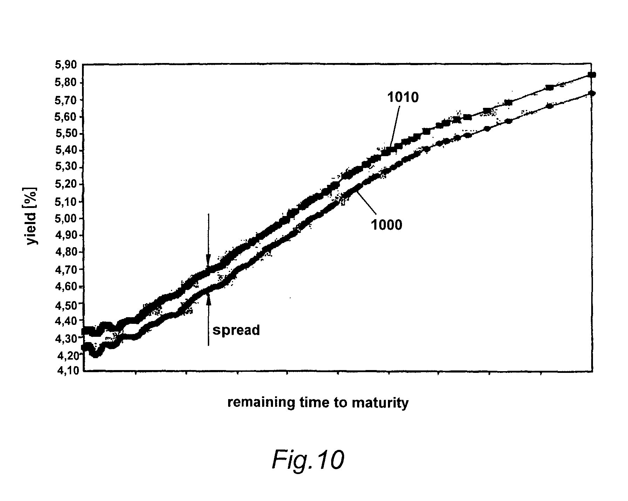

The generation of bond-specific valuation data based on the spread curves, i.e., based on class-specific valuation data, will now be discussed with reference to FIG. 9. In the depicted flowchart, the class pertaining to each bond is determined in step 900. Then, the spread-curve identifier associated to the determined class is used for accessing the spread curve (step 910). After having determined the remaining time to maturity in step 920, the correct fair-market curve is accessed in step 930 and shifted by the spread that was obtained from the accessed spread curve (step 940). An example is depicted in FIG. 10 where the fair-market curve 1000 is shifted to obtain curve 1010.

The shifted curve 1010 can then be used to determine the yield of the bond in step 950. Finally, the outstanding coupon payment is discounted in step 960 using the determined yield.

As apparent from the foregoing, bonds are valuated using class-specific spread curves. The spread curves are calculated using fair-market curves and over-the-counter spreads. Fair-market curves may be calculated from quotes of liquid bonds by building homogeneous classes and assigning the bonds to the classes. The over-the-counter spreads are calculated from relevant market data and over-the-counter bond prices again by building homogeneous classes and assigning the bonds to the classes. That is, a bond valuation technique is provided where bond-specific valuation data is generated from class-specific valuation data which is calculated based on heterogeneous market data.

Turning now back to FIG. 2, the process of operating the data processing system continues with steps 250 and 260 of generating output files and transmitting the generated output files. The output files may be bond price and key ratio files 148, yield curve files 150, and spread curve files 152. The bonds files 148 may include a number of different fields for providing bond-specific valuation data to the market participants 110, 112:

| Field | description |
|---|---|
| WKN | identification number of security |
| ISIN | ISO code |
| Short Name | short name of security |
| Maturity Date | YYYYMMDD |
| Time to Maturity | time to maturity in years |
| Creation Date | YYYYMMDD, calculation date |
| Creation Time | HHMM, consolidation time of fair market prices |
| NBM Segment | non-benchmark segment |
| FM Segment | fair-market segment |
| DBAG Rating | internal rating, corresponding to classes AAA to CCC |
| Clean Price | bond price, calculated from fair-market curve and spread curve |
| Accrued Interest | accrued interest |
| YTM | yield to maturity |
| YTM Convention | used yield-to-maturity method |
| Spread Swap (bp) | spread vs. swap rate, calculated as yield spread |
| Spread Bund (bp) | spread vs. German Federal Government bonds, calculatedas yield spread |
| Spread FM (bp) | spread vs. fair-market curve, calculated as zero spread |
| BPV (Cents) | basis point value, calculated as average price change resulting from a one basis point shift in the zero curve |
| Duration | Duration |
| Modified Duration | modified duration |
| Convexity | Convexity |

The yields file 150 may be used to provide the market participants 110, 112 with fair-market-curve data:

| field | Description |
|---|---|
| Short Name | short name of yield curve |
| Name | full name |
| Date | YYYYMMDD, calculation date |
| Time | HHMM, consolidation time of fair market prices |
| From Date | YYYYMMDD, start of time to maturity |
| To Date | YYYYMMDD, end of time to maturity |
| Yield (%) | zero yield in percent |

Finally, spreads files 152 may be generated and output to provide spread-curve data:

| field | Description |
|---|---|
| Short Name | short name of spread curve |
| Name | full name |
| Date | YYYYMMDD, calculation date |

(continued)

| field | Description |
|---|---|
| Time | HHMM, calculation time of curve |
| From Date | YYYYMMDD, start of time to maturity |
| To Date | YYYYMMDD, end of time to maturity |
| Spread (bp) | Spread |

While the above description of preferred embodiments provides details on a preferred implementation of an automated, self controlled, computer based bond valuation technique, it is to be noted that other embodiments are possible where the sequence of method steps is changed or some steps are performed simultaneously or are even dropped. For example, the bonds relating to the fair-market segment may be redefined on an irregular or regular basis, e.g., on a monthly basis. Fair-market curves may be calculated for instance several times a day while spread curves may be calculated once or more a day. The possibility also exists for delivering selected output data based on particular client specifications.

In addition, the system components and method steps of the above embodiments may be even supplemented with further features. For instance, a "maximum smoothness" algorithm may be implemented to calculate a zero bond curve which represents the fair-market curve for each class. For instance, the algorithm described in V. Frishling and J. Yamamura, "Fitting a Smooth Forward Rate Curve to Coupon Instruments", *Journal of Fixed Income,* Sept. 1996, p. 97-103 may be used for this purpose.

**Claims**

1. A data processing system for valuating debt investment vehicles, comprising:

   a data input unit (114-122) for receiving heterogeneous market data relating to said fixed income securities,

   a classification unit (136) adapted to identify bonds relating to said received market data and assign each of the identified bonds to at least one of a plurality of bond classes;

   a data processing unit (138, 140) adapted to generate class-specific valuation data based on said received market data, and bond-specific valuation data for each of the identified bonds based on the generated class-specific valuation data pertaining to the class of the respective bond; and

   a data output unit (144, 146) for outputting bond-specific valuation data (148) generated by said data processing unit.

2. The data processing system of claim 1, wherein said data input unit is arranged for preprocessing the received heterogeneous market data, and the data processing system further comprises:

   a data storage unit (126) for storing the preprocessed data.

3. The data processing system of claim 2, wherein said data input unit is further arranged for filtering the received heterogeneous market data when preprocessing the data, and said data storage unit is arranged for storing the filtered data.

4. The data processing system of claim 2 or 3, wherein said data input unit is further arranged for converting the received heterogeneous market data to a predefined format, and said data storage unit is arranged for storing said converted data.

5. The data processing system of one of claims 1 to 4, wherein said classification unit is arranged for assigning the bonds to the classes by applying classification rules, said classification rules including a class assignment based on the country of issue, the type of issuer, the volume of issuance, the rating, or the type of the respective bond.

6. The data processing system of claim 5, wherein said classification unit is arranged for assigning the bonds to the classes by applying classification rules, and said classification unit is capable of updating said classification rules.

7. The data processing system of one of claims 1 to 6, wherein said data processing unit is arranged for calculating a zero spread ($\Delta$) for each of the identified bonds when generating the class-specific valuation data.

8. The data processing system of claim 7, wherein said data processing unit is arranged for calculating said zero spread by extracting from said market data an over-the-counter price ($P_{OTC}$) of the respective bond, determining a zero yield ($y_t$) from a fair-market curve (700), and solving an estimation equation using said extracted over-the-counter price and said determined zero yield.

9. The data processing system of claim 8, wherein said data processing unit is arranged for taking into account a coupon payment ($c_t$) of the respective bond when solving said estimation equation.

10. The data processing system of claim 8 or 9, wherein said data processing unit is arranged for accessing the fair-market curve that corresponds to a time stamp of said over-the-counter price, for determining said zero yield.

11. The data processing system of one of claims 8 to 10, wherein said data processing unit is arranged for performing an iterative process when solving said estimation equation.

12. The data processing system of one of claims 1 to 11, wherein said data processing unit is arranged for calculating a spread curve for each of the classes when generating the class-specific valuation data.

13. The data processing system of claim 12, wherein said data processing unit is arranged for calculating said spread curve by calculating zero spreads ($\Delta$) for bonds pertaining to the respective class, and combining the calculated zero spreads to a spread curve for the respective class.

14. The data processing system of claim 13, wherein said data processing unit is arranged for filtering the calculated zero spreads and combining only the filtered zero spreads to the spread curve.

15. The data processing system of claim 13 or 14, wherein said data processing unit is arranged for averaging calculated zero spreads over given time-to-maturity intervals when combining the zero spreads.

16. The data processing system of claim 15, wherein said data processing unit is arranged for interpolating averaged calculated zero spreads to predefined time-to-maturity values, when combining the zero spreads.

17. The data processing system of one of claims 12 to 16, wherein said data output unit is arranged for further outputting spread-curve data (152).

18. The data processing system of one of claims 1 to 17, wherein said data processing unit is arranged for accessing a fair-market curve (1000) when generating the bond-specific valuation data.

19. The data processing system of claim 18, wherein said data processing unit is arranged for further accessing a spread curve of the respective class to determine a spread value therefrom, when generating the bond-specific valuation data.

20. The data processing system of one of claims 1 to 19, wherein said data processing unit is arranged for determining fair-market curves (700, 1000) and using the determined fair-market curves for generating said class-specific valuation data and said bond-specific valuation data.

21. The data processing system of claim 20, wherein said data processing unit is further arranged for repetetively updating said fair-market curves.

22. The data processing system of claim 20 or 21, wherein said data output unit is arranged for further outputting fair-market-curve data (150).

23. A method of valuating debt investment vehicles, said method comprising:

receiving (200, 310) heterogeneous market data relating to said fixed income securities;

identifying (210, 510) bonds relating to said received market data;

assigning (210, 540) each of the identified bonds to at least one of a plurality of bond classes;

generating (220, 230) class-specific valuation data based on said received market data;

generating (240, 250) bond-specific valuation data for each of the identified bonds based on the generated class-specific valuation data pertaining to the class of the respective bond; and

outputting (260) generated bond-specific valuation data (148).

24. The method of claim 23, further comprising:

preprocessing (330, 340) the received heterogeneous market data; and

storing (350) the preprocessed data.

25. The method of claim 24, wherein preprocessing the data comprises:

filtering (330) the received heterogeneous market data.

26. The method of claim 24 or 25, wherein preprocessing the data comprises:

converting (340) the received heterogeneous market data to a predefined format.

27. The method of one of claims 23 to 26, wherein assigning the bonds to the classes comprises:

applying (520) classification rules,

wherein said classification rules include a class assignment based on the country of issue, the type of issuer, the volume of issuance, the rating, or the type of the respective bond.

28. The method of claim 27, further comprising:

updating said classification rules.

29. The method of one of claims 23 to 28, wherein generating the class-specific valuation data comprises:

calculating (220) a zero spread ($\Delta$) for each of the identified bonds.

30. The method of claim 29, wherein calculating said zero spread comprises:

extracting (600) from said market data an over-the-counter price $(P_{OTC})$ of the respective bond;

determining (610) a zero yield $(y_t)$ from a fair-market curve (700); and

solving (620) an estimation equation using said extracted over-the-counter price and said determined zero yield.

31. The method of claim 30, wherein solving said estimation equation takes into account a coupon payment $(c_i)$ of the respective bond.

32. The method of claim 30 or 31, wherein determining said zero yield comprises:

accessing the fair-market curve that corresponds to a time stamp of said over-the-counter price.

33. The method of one of claims 30 to 32, wherein solving said estimation equation comprises:

performing an iterative process.

34. The method of one of claims 23 to 33, wherein generating the class-specific valuation data comprises:

   calculating (230) a spread curve for each of the classes.

35. The method of claim 34, wherein calculating said spread curve comprises:

   calculating (800, 830) zero spreads ($\Delta$) for bonds pertaining to the respective class; and

   combining (810, 850, 880) the calculated zero spreads to a spread curve for the respective class.

36. The method of claim 35, wherein combining the zero spreads comprises:

   filtering (810) the calculated zero spreads; and

   combining only the filtered zero spreads to the spread curve.

37. The method of claim 35 or 36, wherein combining the zero spreads comprises:

   averaging (850) calculated zero spreads over given time-to-maturity intervals.

38. The method of claim 37, wherein combining the zero spreads comprises:

   interpolating (880) averaged calculated zero spreads to predefined time-to-maturity values.

39. The method of one of claims 34 to 38, further comprising:

   outputting (260) spread-curve data (152).

40. The method of one of claims 23 to 39, wherein generating the bond-specific valuation data comprises:

   accessing (930) a fair-market curve (1000).

41. The method of claim 40, wherein generating the bond-specific valuation data further comprises:

   accessing (910) a spread curve of the respective class to determine a spread value therefrom.

42. The method of one of claims 23 to 41, wherein generating said class-specific valuation data and said bond-specific valuation data comprises:

   accessing (610, 930) fair-market curves (700, 1000).

43. The method of claim 42, further comprising:

   repetitively updating said fair-market curves.

44. The method of claim 42 or 43, further comprising:

   outputting fair-market-curve data (150).

Fig.1

```
        ╭─────────────────╮
        │  Main Process   │
        ╰────────┬────────╯
                 │
                 ▼
        ┌─────────────────┐
        │ Collecting data │ ─── 200
        └────────┬────────┘
                 │
                 ▼
    ┌─────────────────────────┐
    │ Assigning bonds to classes │ ─── 210
    └────────────┬────────────┘
                 │
                 ▼
        ┌─────────────────┐
        │ Estimating spreads │ ─── 220
        └────────┬────────┘
                 │
                 ▼
    ┌─────────────────────────┐
    │ Calculating spread curves │ ─── 230
    └────────────┬────────────┘
                 │
                 ▼
        ┌─────────────────┐
        │ Valuating bonds │ ─── 240
        └────────┬────────┘
                 │
                 ▼
    ┌─────────────────────────┐
    │ Generating output files │ ─── 250
    └────────────┬────────────┘
                 │
                 ▼
    ┌─────────────────────────┐
    │ Transmitting output files │ ─── 260
    └────────────┬────────────┘
                 │
                 ▼
        ╭─────────────────╮
        │     Return      │
        ╰─────────────────╯
```

*Fig.2*

```
        ┌──────────────────┐
        │  Collecting data │
        └──────────────────┘
                 │
                 ▼
        ┌──────────────────┐
        │ Selecting data   │——— 300
        │ sources          │
        └──────────────────┘
                 │
                 ▼
        ┌──────────────────┐
        │ Receiving data   │——— 310
        │ from selected    │
        │ sources          │
        └──────────────────┘
                 │
                 ▼
        ┌──────────────────┐
        │ Buffering        │——— 320
        │ received data    │
        └──────────────────┘
                 │
                 ▼
        ┌──────────────────┐
        │ Filtering data   │——— 330
        └──────────────────┘
                 │
                 ▼
        ┌──────────────────┐
        │ Converting data  │——— 340
        │ to uniform       │
        │ format           │
        └──────────────────┘
                 │
                 ▼
        ┌──────────────────┐
        │ Storing          │——— 350
        │ converted data   │
        └──────────────────┘
                 │
                 ▼
        ┌──────────────────┐
        │     Return       │
        └──────────────────┘
```

*Fig.3*

```
                    ┌──────────────────┐
                    │  Filtering data  │
                    └────────┬─────────┘
                             │
                             ▼
              ┌─────────────────────────┐
              │   Accessing data from   │─── 400
              │       one source        │
              └────────────┬────────────┘
                           │
                           ▼
              ┌─────────────────────────┐
              │    Selecting data type  │─── 410
              └────────────┬────────────┘
                           │
                           ▼
              ┌─────────────────────────┐
              │ Applying filtering rules│─── 420
              │  to accessed data of    │
              │     selected type       │
              └────────────┬────────────┘
                           │
                      430  ▼
                      ╱────────╲      yes
                     ╱ another  ╲─────────
                     ╲  type ?   ╱
                      ╲────────╱
                           │ no
                           ▼
                      440
                      ╱────────╲      yes
                     ╱ another  ╲─────────
                     ╲ source ?  ╱
                      ╲────────╱
                           │ no
                           ▼
                    ┌──────────────────┐
                    │     Return       │
                    └──────────────────┘
```

*Fig.4*

17

Assigning bonds
to classes

Accessing stored data — 500

Investigating data to
determine bond type — 510

Accessing classification
criteria — 520

Determining class for the
bond — 530

Associating data with
class identifier — 540

550

data
remaining ?   yes

no

Return

*Fig.5*

```
        ┌─────────────────────┐
        │  Estimating spreads  │
        └──────────┬──────────┘
                   │              ◄──────────────┐
                   ▼                             │
        ┌─────────────────────┐  ╱ 600           │
        │ Retrieving OTC price │                  │
        │       of bond        │                  │
        └──────────┬──────────┘                  │
                   │                              │
                   ▼                              │
        ┌─────────────────────────┐  ╱ 610       │
        │ For each time to maturity│              │
        │         value:           │              │
        │ ▪ obtaining coupon       │              │
        │   payment                │              │
        │ ▪ obtaining zero yield   │              │
        └──────────┬──────────────┘              │
                   │                              │
                   ▼                              │
        ┌─────────────────────┐  ╱ 620           │
        │ Calculating zero     │                  │
        │      spread          │                  │
        └──────────┬──────────┘                  │
                   │              630             │
                   ▼                              │
              ◇─────────◇      yes                │
             ╱ next bond ? ╲ ───────────────────┘
              ◇─────────◇
                   │ no
                   ▼
        ┌─────────────────────┐
        │       Return         │
        └─────────────────────┘
```

Fig.6

*Fig.7*

Fig.8

Fig.9

Fig.10

**European Patent Office**

**DECLARATION**

which under Rule 45 of the European Patent Convention shall be considered, for the purposes of subsequent proceedings, as the European search report

**Application Number**

EP 02 01 4464

| | CLASSIFICATION OF THE APPLICATION (Int.Cl.7) |
|---|---|
| The Search Division considers that the present application, does not comply with the provisions of the EPC to such an extent that it is not possible to carry out a meaningful search into the state of the art on the basis of all claims | G06F17/60 |

Reason:

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| THE HAGUE | 29 November 2002 | Papastefanou, E |

EPO FORM 1504 (P04C37)